# EUROPÄISCHE PATENTSCHRIFT

(11) **EP 2 326 226 B1**
(45) Veröffentlichungstag und Bekanntmachung des Hinweises auf die Patenterteilung: **26.12.2012**
(21) Anmeldenummer: 09772472.8
(22) Anmeldetag: 01.07.2009
(51) Int. Cl.: A47J 43/07, B01F 7/30

(54) **Rührwerkzeug für ein Küchengerät**
Stirring implement for a kitchen appliance
Agitateur pour appareil ménager

(30) Priorität: 02.07.2008 DE 102008031247
(43) Veröffentlichungstag der Anmeldung: 01.06.2011
(73) Patentinhaber: BSH Bosch und Siemens Hausgeräte GmbH, 81739 München (DE)
(72) Erfinder: MAZEJ, Stanislav, 3303 Gomilsko (SI); BEZOVNIK, Irena, 3333 Ljubno ob Savinji (SI)
(74) Vertreter: Marton, Dan-Robert
(86) Internationale Anmeldenummer: PCT/EP2009/058249
(87) Internationale Veröffentlichungsnummer: WO 2010/000772

(56) Entgegenhaltungen:
- DE-C- 967 158
- GB-A- 667 863
- US-A- 4 148 590

## Beschreibung

### Hintergrund der Erfindung

Die Erfindung betrifft ein Rührwerkzeug für ein Küchengerät, mit einem um eine Drehachse drehbaren Basisteil und mindestens einem Flügelrührer, der frei drehend im Basisteil gelagert ist und dessen Drehachse gegenüber der Drehachse des Basisteils radial versetzt anordnet ist, wobei sich mindestens zwei Rührflügel radial von der Drehachse des Flügelrührers nach außen erstrecken. Die Erfindung betrifft ferner ein derartiges Rührwerkzeug, bei welchem der Strömungswiderstandsbeiwert der Rührflügel bei Anströmung von Vorder- und Rückseite unterschiedlich ausgebildet ist.

### Stand der Technik

Ein Rührwerkzeug der eingangs genannten Art ist aus der japanischen Patentanmeldung JP 03146125 A bekannt. Das in ein topfartiges Rührgefäß einsetzbare Rührwerkzeug weist eine sich vertikal nach oben erstreckende Antriebswelle auf, von welcher ein Basisteil in Form einander gegenüberliegender, starrer Flügel und, hierzu um 90° verdreht, zwei starre Stäbe in das Rührgut ragen. An beiden Enden ist das flügelartige Basisteil U-förmig ausgenommen. Die Ausnehmungen nehmen Hilfswerkzeuge auf, die frei drehbar im Basisteil gelagert sind und als Flügelrührer mit halbkugelförmig gewölbten Rührflügeln ausgebildet sind.

Die Drehung der im Verhältnis zu den Gesamtabmessungen des Rührwerkzeugs sehr kleinen Flügelrührer wird dadurch hervorgerufen, dass der jeweils radial außen liegende Rührflügel beim Drehen des Basisteil mit höherer Geschwindigkeit als der jeweils radial innen liegende Rührflügel durch das Mischgut geführt und der Flügelrührer infolge der radial außen höheren Anströmgeschwindigkeit entgegen der Drehrichtung des Basisteils in Rotation versetzt wird. Durch den unterschiedlichen Strömungswiderstandsbeiwert der halbkugelförmigen Rührflügel wird, ähnlich einem Anemometer, ein weiteres Drehmoment in gleicher Richtung erzeugt.

Ein derartiges Rührwerkzeug ist grundsätzlich zum Rühren niederviskosen Mischguts gut geeignet. Hinsichtlich höher viskosem, zum Anhaften am Behälter neigendem oder aufzuschäumendem Mischgut ist die Rührwirkung jedoch unbefriedigend.

Ein anderes Rührwerkzeug wird in der Offenlegungsschrift DE 26 38 739 A1 offenbart. Dieses Rührwerkzeug ist Teil einer Vorrichtung zum Mischen einer begasten Flüssigkeit in einem Bioreaktor und besteht aus einer den Reaktor axial durchdringenden Antriebswelle, welche in dessen Stirnflächen drehbar gelagert und mit einer außerhalb des Reaktors angeordneten Motor-/Getriebekombination verbunden ist. An ihren den Stirnflächen des Reaktors zugewandten Enden ist die Antriebswelle mit sternförmigen, deckungsgleich ausgerichteten Mitnehmerkränzen ausgestattet. Die Enden der einander zugeordneten, auskragenden Arme der Mitnehmerkränze nehmen jeweils ein zwischen den Mitnehmerkränzen angeordnetes Hilfswerkzeug in Form eines Flügelrührers auf, der an beiden Enden frei drehbar in den Mitnehmerkränzen gelagert ist.

Jeder Flügelrührer ist mit zwei planen, rechteckigen Rührflügeln versehen, die sich einander diametral gegenüber liegend von der Drehachse des Flügelrührers weg erstrecken. Der Strömungswiderstandsbeiwert der Rührflügel ist damit bei Anströmung von der Vorder- und Rückseite gleich groß.

In der Patentschrift US 2,170,280 wird ein ähnliches Rührwerkzeug beschrieben, dessen Flügelrührer jedoch in Abhängigkeit von der Drehstellung des Basisteils durch formschlüssigen Kontakt mit von den Stirnflächen in den Behälter ragenden, halbkugelförmigen Vorsprüngen zwangsweise in Drehung versetzt werden.

Ein weiteres Rührwerkzeug wird in der Patentschrift GB 667,863 offenbart. Das in zwei entgegen gesetzten Richtungen radial von der Antriebswelle abragende Basisteil ist einseitig mit einem starren Rührarm und an der anderen Seite mit einem frei drehenden Flügelrührer versehen, dessen Rührflügel aus rahmenartig umlaufendem Draht gebogen sind.

In der Offenlegungsschrift DE 24 40 809 A1 wird ein ähnliches Rührwerkzeug beschrieben, das anstelle flügelartiger Rührelemente eine Anzahl von der Drehachse des Hilfswerkzeugs sternförmig radial nach außen ragende oder aber von einem frei drehbaren Teller axial nach unten auskragende Stäbe aufweist.

Rührwerkzeuge mit frei drehenden Hilfswerkzeugen, die eine käfigartige Anordnung von achsparallelen Stäben aufweisen, sind ferner aus den Patentschriften US 4,068,832 und US 4,176,970 bekannt.

Die europäische Patentanmeldung EP 0 931 493 A1 betrifft ein Rührwerkzeug mit frei drehenden Hilfswerkzeugen, die wendelförmig aus Draht gebogen sind.

**Auch die** DE 967 158 C **offenbart ein Rührwerkzeug mit zwei in einem Gestell angeordneten Rührern gemäß dem Oberbegriff des Anspruchs 1**.

Alle zuvor genannten Rührwerkzeuge weisen den Vorteil auf, dass zum Antrieb der Flügelrührer keine weiteren Getriebevorrichtungen notwendig sind, da das hierzu erforderliche Drehmoment durch den Antrieb des Basisteils in Verbindung mit der Anströmung der Flügelrührer erzeugt wird. In Abhängigkeit von der Viskosität der Rührguts ist die Mischwirkung jedoch noch verbesserungswürdig.

### Der Erfindung zugrundeliegende Aufgabe

Der Erfindung liegt die Aufgabe zugrunde, ein gattungsgemäßes Rührwerkzeug hinsichtlich seiner Mischwirkung und der Breite seines Einsatzbereichs weiter zu verbessern.

### Erfindungsgemäße Lösung

Die der Erfindung zugrunde liegende Aufgabe wird bei einem Rührwerkzeug der eingangs genannten Art mit den Merkmalen des Anspruchs 1, bei welchem der Strömungswiderstandsbeiwert der Rührflügel bei Anströmung von Vorder- und Rückseite unterschiedlich ausgebildet ist, dadurch gelöst, dass die Außenkontur der Rührflügel im Wesentlichen äquidistant zur Drehachse des Flügelrührers verläuft.

Durch die unterschiedlichen Strömungswiderstandsbeiwerte der Rührflügel wird, vergleichbar dem nächsten Stand der Technik, ein weiteres antreibendes (oder auch bremsendes) Drehmoment in den frei drehenden Flügelrührern erzeugt, welches gezielt zur Beeinflussung der Rotationsgeschwindigkeit der Flügelrührer genutzt werden kann. Mittels einer Außenkontur des Rührflügels, welche im Wesentlichen äquidistant zur Drehachse des Flügelrührers verläuft, ist es darüber hinaus möglich, mit dem Rührflügel an wesentlichen Bereichen der inneren Mantelfläche zylinderförmiger Rührgefäße entlang zu streifen und dabei am Behälter anhaftendes Rührgut erneut dem Mischprozess zuzuführen.

Der Begriff Außenkontur umfasst dabei diejenige Kontur des Rührflügels, welche bei einer entsprechenden Drehstellung des Rührflügels der inneren Mantelfläche der Rührschüssel maximal angenähert ist. Ein erfindungsgemäß ausgebildeter Rührflügel kann beispielsweise in einer von der Drehachse des Flügelrührers und der Außenkontur des betreffenden Rührflügels aufgespannten Eben eine rechteckige Projektion aufweisen. Das erfindungsgemäße, insbesondere für den Einsatz an Küchengeräten vorgesehene Rührwerkzeug eignet sich daher nicht nur zum Rühren niederviskoser Flüssigkeiten, sondern kann mit Erfolg auch zum Schlagen von Sahne, Eischnee, Bisquitteig und ähnlichem höherviskosen, klebrigen Rührgut eingesetzt werden. Bei sehr festem Mischgut, beispielsweise Hackfleisch, kann dieses Rührwerkzeug seine Einsatzgrenze erreichen. Wegen der Autorotation der Flügelrührer ist der Bauaufwand für das Rührwerkzeug trotz hoher Leistungsfähigkeit vergleichsweise gering.

Nach der Ausbildung der Erfindung ist vorgesehen, dass bei einem gattungsgemäßen Rührwerkzeug die Rührflügel Schlitze aufweisen. Die Schlitze senken einerseits den Strömungswiderstand der Flügelrührer bei Drehung des Basisteils. Darüber hinaus wird das Rührgut durch die Schlitze hindurch gepresst und bei entsprechender Eintauchtiefe mit rückseitig der Rührflügel angesaugter Luft vermengt, was insbesondere beim Schlagen von aufzuschäumendem Rührgut vorteilhaft ist.

### Bevorzugte Ausgestaltung der Erfindung

Vorteilhafte Aus- oder Weiterbildungen, welche einzeln oder in Kombination miteinander eingesetzt werden können, sind Gegenstand der abhängigen Ansprüche.

Die unterschiedlichen Strömungswiderstandsbeiwerte der Rührflügel werden ohne Beeinträchtigung der erfindungsgemäßen Wirkung vorzugsweise dadurch bewirkt, dass die Rührflügel um eine Richtung senkrecht zur Drehachse des Flügelrührers bogenförmig gekrümmt sind. Mit Vorteil ist der Strömungswiderstandbeiwert des Rührflügels in seiner von der Antriebswelle weitmöglichst entfernten Position größer ist als in seiner der Antriebswelle nächsten Position. Hierdurch wird ein Drehmoment erzeugt, welches die bereits durch die unterschiedlichen Anströmgeschwindigkeiten hervorgerufene Drehung des Flügelrührers unterstützt.

Die Krümmung der Rührflügel ist vorzugsweise kreisbogenförmig ausgebildet, wobei der Radius der Krümmung dem 0,5 bis 0,7fachen, insbesondere dem 0,6fachen, der radialen Erstreckung der Rührflügel entspricht. Hierdurch wird ein ausreichender Unterschied im Strömungswiderstandsbeiwert bei Anströmung von der konvexen gegenüber der konkaven Flächenseite des Rührflügels hervorgerufen.

Um die zuvor genannte Unterstützung der Drehbewegung des Flügelrührers zu erzielen, wird der Krümmungsmittelpunkt des jeweils radial außen liegenden Rührflügels dabei jenseits seiner angeströmten Vorderseite angeordnet. In Anströmrichtung sind die jeweils außen liegenden Rührflügel somit konkav, die jeweils innen liegenden Rührflügel jedoch konvex gekrümmt.

Die Drehachsen der Flügelrührer sind vorzugsweise parallel zur Antriebswelle des Rührwerkzeugs ausgerichtet, wodurch eine optimale Anpassung der Rührkinematik an üblicherweise zylinderförmige Rührgefäße bewirkt wird. Die radiale Ausdehnung der Rührflügel beträgt mit Vorteil das 0,4 bis 0,8fache, insbesondere etwa das 0,6fache des Versatzes zwischen der Drehachse des Basisteils und den Drehachsen der Flügelrührer. Hierdurch entsteht im Rührgut ein von den Rührflügeln nicht durchfahrener Kernbereich, in welchen die Flügelrührer in bestimmten Ausbildungen der Erfindung Rührgut einspeisen. Dieses steigt nachfolgend nach oben und sinkt seitlich entlang der Mantelfläche des Rührgefäßes wieder in Richtung der Flügelrührer ab. Ferner kann in weiteren Ausbildungen der Erfindung durch die hohe Viskosität des Rührguts und die damit verbundenen Schubspannungen Material aus dem Kernbereich von in Bewegung befindlichem Rührgut mitgezogen und dem Rührprozess erneut zugeführt werden.

Bei einem mit Schlitzen ausgestatteten Rührflügel verlaufen diese mit Vorteil parallel zur Drehachse des Flügelrührers, wodurch eine besonders gute Durchmischung und Verschäumung des Rührguts bewirkt wird. Zur Anpassung an unterschiedliches Rührgut ist darüber hinaus vorzugsweise vorgesehen, dass die Flügelrührer und/oder die Rührflügel lösbar und/oder austauschbar ausgebildet sind. Der Austausch ist besonders einfach vorzunehmen, wenn die Rührflügel starr an einen Schaft angesetzt sind, dessen auskragendes Ende im Basisteil drehbar und lösbar aufgenommen ist.

Um Querkräfte in der Antriebswelle so gering wie möglich zu halten, weist das Basisteil vorzugsweise zwei einander diametral gegenüberliegende Arme auf, an denen jeweils ein Flügelrührer angeordnet ist. Ebenso ist aus Gründen einer symmetrischen Kraftverteilung bevorzugt vorgesehen, dass die Rührflügel gleichmäßig über den Umfang des Flügelrührers verteilt angeordnet sind. Bei einem küchenüblichen Abmessungen entsprechenden Rührgefäß weist der Flügelrührer dabei mit Vorteil drei Rührflügel auf.

Ein oder mehrere Teile des Rührwerkzeugs, insbesondere die Flügelrüher und/oder die Schafte und/oder das Basisteil, besonders vorzugsweise alle Teile des Rührwerkzeugs, sind vorzugsweise aus einem Kunststoffmaterial gebildet, besonders vorzugsweise aus einem Compound-Material mit dem Hauptbestandteil Polyphenylensulfid (PPS) oder Polyamid (PA). Bevorzugte Polyamide sind PA46 und PA66. Das bevorzugte Material enthält eine Beimischung von Glas- oder Kohlefaser, wobei Kohlefaser besonders bevorzugt ist, zwischen 10 und 40 Gewichtsprozent (Gew.-%), besonders vorzugsweise zwischen 15 und 30 Gew.-%. Das bevorzugte Material enthält eine Beimischung von Polytetrafluorethylen (PTFE) zwischen 5 und 15 Gew.-%, besonders vorzugsweise zwischen 10 und 15 Gew.-%. Die bevorzugten Materialien können eine vorteilhaft hohen Festigkeit und einen vorteilhaft geringen Verschleiß haben. Durch die Verwendung von Kunststoff können die Teile des Rührwerkzeugs einfach im Spritzgussverfahren hergestellt werden.

Ein besonders bevorzugtes Kunststoffmaterial enthält 65 Gew.-% PA66, 20 Gew.-% Kohlefaser und 15 Gew.-% PTFE. Ein solches Material ist z.B. von der Ensinger Compounds, HP Polymer GmbH, Lenzing, Österreich unter der Bezeichnung "TECACOMP® PA66 CF20 TF15" erhältlich. Ein weiteres besonders bevorzugtes Kunststoffmaterial enthält 75 Gew.-% PA46, 15 Gew.-% Kohlefaser und 10 Gew.-% PTFE, z.B. "TECACOMP® PA46 CF15 TF10", erhältlich vom gleichen Hersteller. Ein weiteres besonders bevorzugtes Kunststoffmaterial enthält 70 Gew.-% PPS und 30 Gew.-% Kohlefaser, z.B. "TECACOMP® PPS CF30 ", erhältlich vom gleichen Hersteller.

### Kurzbeschreibung der Figuren

Die Erfindung wird im Folgenden anhand schematischer Zeichnungen an einem Ausführungsbeispiel mit weiteren Einzelheiten näher erläutert.

Es zeigen:
- Fig. 1:: eine perspektivische Ansicht eines erfindungsgemäß ausgebildeten Rührwerkzeugs;
- Fig. 2:: einen Querschnitt durch einen der im Rührwerkzeug nach Fig. 1 eingesetzten Flügelrührer;
- Fig. 3:: eine seitliche Ansicht des Flügelrührers nach Fig. 2.

### Ausführliche Beschreibung der Erfindung anhand eines Ausführungsbeispiels

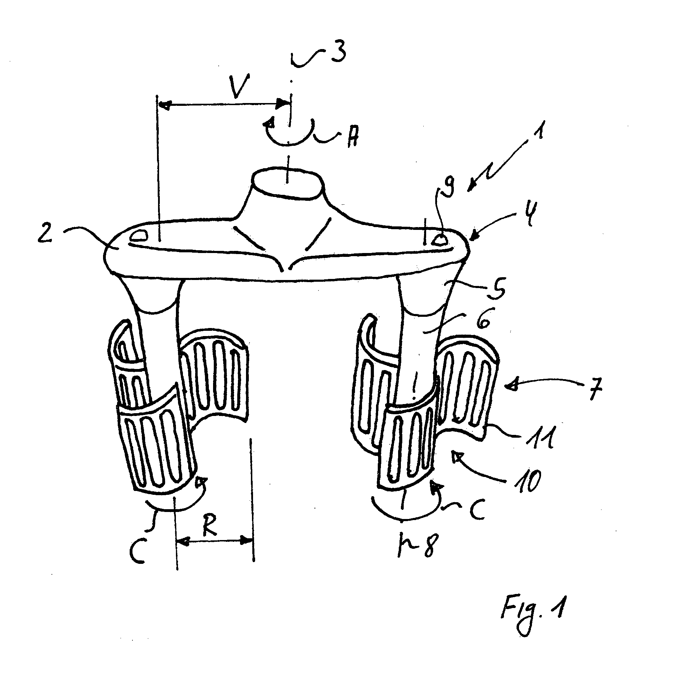

Das in Fig. 1 dargestellte Rührwerkzeug 1 besteht aus einem in normaler Gebrauchslage horizontalen Basisteil 2, das sich trägerartig beiderseits seiner vertikalen Drehachse 3 erstreckt. Im Bereich der Drehachse 3 ist das Basisteil 2 mittels einer nicht dargestellten Antriebswelle in Richtung des Pfeils A angetrieben. Die Antriebswelle kann zum Beispiel einstückig an das Basisteil 2 angeformt oder aber drehfest in dieses eingeschoben werden.

Aus den einander diametral gegenüber liegenden Armen 4 des Basisteils 2 kragen Fortsätze 5 nach unten aus, in welchen jeweils ein vertikaler Schaft 6 eines Flügelrührers 7 um eine Drehachse 8 drehbar gelagert ist. Das Basisteil 2 wird vorzugsweise durch Spritzgießen von Kunststoff, z.B. einem Material aus 65 Gew.-% PA66, 20 Gew.-% Kohlefaser und 15 Gew.-% PTFE, gefertigt, gegebenenfalls mit einer verstärkenden Metalleinlage.

Nachfolgend wird nur der rechte Flügelrührer 7 im Detail beschrieben. Diese Beschreibung gilt für die gegenüberliegende Seite sinngemäß. Die Lagerung des Schafts 6 ist so ausgebildet, dass sich dieser um seine parallel ausgerichtete Drehachse 8 frei, also möglichst reibarm und ohne direkten Antrieb, drehen kann. Eine solche Lagerung kann beispielsweise durch zwei Kugellager gebildet werden, die koaxial zur Drehachse 8, aber zueinander axial beabstandet, im betreffenden Fortsatz 5 angeordnet sind. Da eine Antriebseinrichtung für die Flügelrührer 7 nicht vorgesehen ist, ist der konstruktive Aufwand relativ gering.

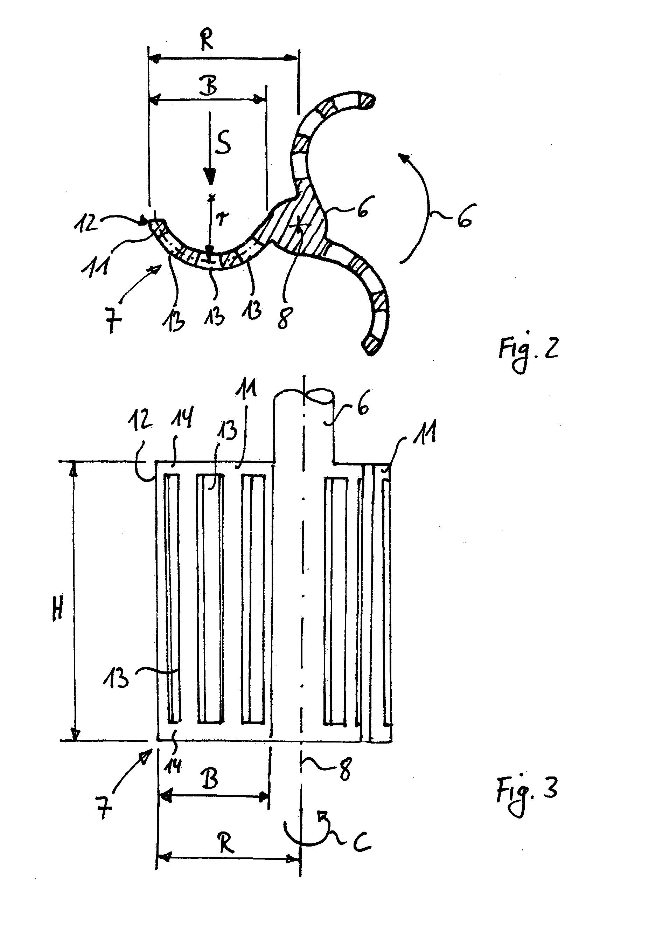

Durch Pressen eines Druckknopfes 9 wird eine im Fortsatz 5 befindliche, den zugeordneten Schaft 6 haltende Verriegelungsvorrichtung gelöst, so dass der betreffende Flügelrührer 7 zum Zwecke des Austausches, der Reinigung oder der Lagerung entnommen werden kann. Am unteren Ende 10 des Schaftes 6 ragend drei gleichmäßig über den Umfang des Schaftes 6 verteilt angeordnete Rührflügel 11 radial von diesem ab. Die Rührflügel 11 werden bevorzugt einstückig mit dem Schaft 6 ebenfalls durch Spitzgießen von Kunststoff, z.B. einem Material aus 65 Gew.-% PA66, 20 Gew.-% Kohlefaser und 15 Gew.-% PTFE, gefertigt, gegebenenfalls mit einer verstärkenden Metalleinlage. Die Rührflügel 11 weisen in seitlicher Ansicht, wie aus Fig. 3 ersichtlich, eine rechteckige Projektion mit einer Höhe H und einer Breite B auf, sind hinsichtlich ihres in Fig. 2 erkennbaren Querschnitts jedoch in radialer Richtung kreisbogenförmig gekrümmt ausgebildet. Die äußerste Kante 12 eines jeden Rührflügels 11 streicht bei Drehung des Schaftes 6 um die Drehachse 8 einen Kreis mit dem Radius R ab.

Grundsätzlich sind auch andere Arten der drehbaren Aufnahme des Flügelrührers (7) denkbar, beispielsweise durch Aufsetzen drehbar gelagerter, mit den Rührflügeln (11) versehener Kränze auf aus dem Basisteil (2) nach unten auskragende Schäfte.

Der Radius R der Flügelrührer 7 entspricht, wie in Fig. 1 gezeigt, etwa dem 0,6fachen des Versatzes V zwischen der Drehachse 3 des Basisteils 2 und der Drehachse 8 der Flügelrührer 7. Die jeweils innenliegenden Rührflügeln 11 sind also zueinander deutlich beabstandet. Der Radius r der kreisbogenförmigen Krümmung jedes Rührflügels 11 beträgt etwa das 0,6fache der Breite B der seitlichen Projektion des Rührflügels 11 , so dass die Rührflügel 11 im Querschnitt einen Kreisringsektor ausbilden, der ein wenig kleiner als ein Halbkreis ausgeführt ist, wobei die Kante 12 schaberartig abragt. Die Höhe H der Rührflügel 11 wird in Abhängigkeit vom empfohlenen Füllstand im nicht gezeigten Rührgefäß bemessen.

Die Rührflügel 11 sind ferner mit einer Anzahl zueinander parallel beabstandeter vertikaler Schlitzen 13 ausgestattet, die sich über einen wesentlichen Teil der Höhe H der Rührflügel 11 erstrecken. Die Schlitze 13 sind nicht randoffen ausgeführt, so dass oberhalb und unterhalb der Schlitze 13 jeweils ein Steg 14 des Rührflügels 11 verbleibt. Die Rührflügel 11 weisen hierdurch trotz der Schwächung noch eine relativ große Steifigkeit auf.

Zur Durchführung des Rührvorgangs wird das auf eine nicht gezeigte Küchenmaschine aufgesetzte Rührwerkzeug 1 von oben in ein vorzugsweise zylinderförmiges Rührgefäß eingeführt, bis die Flügelrührer 7 nur noch über einen Spalt vom Boden des Rührgefäßes beabstandet sind. Der Füllstand des Rührgefäßes ist so gewählt, dass das Rührgut bis über die Höhe H der Rührflügel 11 reicht. Anschließend wird die Küchenmaschine angeschaltet, wodurch das nicht in das Rührgut eintauchende Basisteil 2 des Rührwerkzeugs 1 in Richtung des Pfeils A in Drehung versetzt wird. Die außen liegenden, also der Drehachse 3 abgewandten Rührflügel 11 der Flügelrührer 7 werden dabei mit einer höheren Geschwindigkeit durch das Rührgut bewegt als die innen liegenden, also der Drehachse 3 zugewandten Rührflügel 11. Darüber hinaus ist der Strömungswiderstandbeiwert der jeweils außen liegenden Rührflügel 11 bei der sich durch die Drehung des Basisteils 2 einstellenden Anströmung in Richtung des Pfeils S infolge seiner konkaven Krümmung größer als der Strömungswiderstandsbeiwert der konvexen Krümmung der jeweils innenliegenden Rührflügel 11. Beides führt zu einem auf den Flügelrührer 7 wirkenden Drehmoment, welches infolge seiner freien Drehbarkeit eine Rotation jedes Flügelrührers 7 in Richtung des Pfeils C, also gegenläufig zur Drehung des Basisteils (Pfeil A), bewirkt.

Beim Betreiben des Rührwerkzeugs 1 streifen die Kanten 12 an der inneren Mantelfläche und am Boden des Rührgefäßes anhaftendes Rührgut weitgehend ab. Dieses wird ferner durch die Schlitze 13 hindurch gepresst, verwirbelt und mit Luft versetzt, wodurch beispielsweise beim Schlagen von Sahne ein Aufschäumen bewirkt wird. Darüber hinaus kann bei bestimmten Ausbildungen der Erfindung durch die Drehung der Flügelrührer 7 Rührgut in Richtung des Zentrums des von den Rührflügeln 11 nicht bestrichenen Volumens des Rührgefäßes gefördert werden, so dass das dort bereits befindliche Rührgut verdrängt und dem Rührprozess erneut zugeführt wird. Ferner kann bei anderen Ausbildungen der Erfindung ein Herausziehen von Rührgut aus diesem Kernbereich infolge Schubübertragung von dem in Bewegung befindlichen Rührgut in das ruhende Material erfolgen. Die Drehzahl für den Antrieb des Basisteils beträgt vorzugsweise zwischen 600 und 900 Umdrehungen pro Minute.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Rührwerkzeug (1) für ein Küchengerät, mit einem um eine Drehachse (3) drehbaren Basisteil (2) und mindestens einem Flügelrührer (7), der frei drehend im Basisteil (2) gelagert ist und dessen Drehachse (8) gegenüber der Drehachse (3) des Basisteils (2) radial versetzt anordnet ist, wobei sich mindestens zwei Rührflügel (11) radial von der Drehachse (8) des Flügelrührers (7) nach außen erstrecken und der Strömungswiderstandsbeiwert der Rührflügel (11) bei Anströmung von Vorder- und Rückseite unterschiedlich ist, wobei die Außenkontur der Rührflügel (11) im Wesentlichen äquidistant zur Drehachse (8) des Flügelrührers (7) verläuft,
**dadurch gekennzeichnet, dass** die Rührflügel (11) Schlitze (13) aufweisen.

2. Rührwerkzeug nach Anspruch 1, **dadurch gekennzeichnet, dass** die Rührflügel (11) um eine Richtung senkrecht zur Drehachse (8) des Flügelrührers (7) bogenförmig gekrümmt sind.

3. Rührwerkzeug nach Anspruch 1 oder 2, **dadurch gekennzeichnet, dass** der Strömungswiderstandbeiwert des Rührflügels (11) bei Drehung des Basisteils (2) in seiner von der Antriebswelle weitmöglichst entfernten Position größer ist als in seiner der Antriebswelle nächsten Position.

4. Rührflügel nach einem der vorhergehenden Ansprüche, durch gekennzeichnet, dass die Krümmung kreisbogenförmig ausgebildet ist.

5. Rührwerkzeug nach Anspruch 4, **dadurch gekennzeichnet, dass** der Radius (r) der Krümmung dem 0,5 bis 0,7fachen, bevorzugt dem 0,6fachen, der radialen Ersteckung (Breite B) der Rührflügel (11) entspricht.

6. Rührwerkzeug nach einem der Ansprüche 4 oder 5, **dadurch gekennzeichnet, dass** der Krümmungsmittelpunkt des jeweils radial außen liegenden Rührflügels (11) jenseits seiner Vorderseite angeordnet ist.

7. Rührwerkzeug nach einem der vorhergehenden Ansprüche, **dadurch gekennzeichnet, dass** die Drehachsen (8) der Flügelrührer (7) parallel zur Drehachse (3) des Basisteils (2) des Rührwerkzeugs (1) ausgerichtet sind.

8. Rührwerkzeug nach Anspruch 7, **dadurch gekennzeichnet, dass** die radiale Ausdehnung (Breite B) der Rührflügel (11) dem 0,4 bis 0,8fachen, insbesondere etwa dem 0,6fachen des Versatzes (V) zwischen der Drehachse (3) des Basisteils (2) und der Drehachse (8) der Flügelrührer (7) entspricht.

9. Rührwerkzeug nach Anspruch 1, **dadurch gekennzeichnet, dass** die Schlitze (13) parallel zur Drehachse (8) des Flügelrührers (7) verlaufen.

10. Rührwerkzeug nach einem der vorhergehenden Ansprüche, **dadurch gekennzeichnet, dass** die Flügelrührer (7) und/oder die Rührflügel (11) lösbar und/oder austauschbar vorgesehen sind.

11. Rührwerkzeug nach einem der vorhergehenden Ansprüche, **dadurch gekennzeichnet, dass** die Rührflügel (11) an einen Schaft (6) angesetzt sind, dessen auskragendes Ende im Basisteil (2) drehbar aufgenommen ist.

12. Rührwerkzeug nach einem der vorhergehenden Ansprüche, **dadurch gekennzeichnet, dass** das Basisteil (2) zwei einander diametral gegenüberliegende Arme (4) aufweist, an denen jeweils ein Flügelrührer (7) angeordnet ist.

13. Rührwerkzeug nach einem der vorhergehenden Ansprüche, **dadurch gekennzeichnet, dass** die Rührflügel (11) gleichmäßig über den Umfang des Flügelrührers (7) verteilt angeordnet sind.

14. Rührwerkzeug nach Anspruch 12, **dadurch gekennzeichnet, dass** jeder Flügelrührer (7) drei Rührflügel (11) aufweist.

## Claims

1. Stirring tool (1), for a kitchen appliance, comprising a base part (2), which is rotatable about an axis (3) of rotation, and at least one vane stirrer (7), which is mounted to be freely rotating in the base part (2) and the axis (8) of rotation of which is arranged to be radially offset relative to the axis (3) of rotation of the base part (2), wherein at least two stirring vanes (11) extend radially outwardly from the axis (8) of rotation of the vane stirrer (7) and the flow resistance coefficient of the stirring vanes (11) differs for incident flow at the front side and back side, wherein the outer contour of the stirring vanes (11) extends substantially equally distantly from the axis (8) of rotation of the vane stirrer (7), **characterised in that** the stirring vanes (11) have slots (13).

2. Stirring tool according to claim 1, **characterised in that** stirring vanes (11) are curved about a direction perpendicular to the axis (8) of rotation of the vane stirrer (7).

3. Stirring tool according to claim 1 or 2, **characterised in that** the flow resistance coefficient of the stirring vane (11) on rotation of the base part (2) into its position furthest from the drive shaft is greater than in its position nearest the drive shaft.

4. Stirring tool according to any one of the preceding claim, **characterised in that** the curvature is formed to be arcuate.

5. Stirring tool according to claim 4, **characterised in** the radius (r) of curvature corresponds with 0.5 to 0.7 times, preferably 0.6 times, the radial extent (width B) of the stirring vanes (11).

6. Stirring tool according to one of claims 4 and 5, **characterised in that** the centre of curvature of each radially outwardly disposed stirring vane (11) is arranged on the other side to its front side.

7. Stirring tool according to any one of the preceding claims, **characterised in that** the axes (8) of rotation of the vane stirrers (7) are oriented parallelly to the axis (3) of rotation of the base part (2) of the stirring tool (1).

8. Stirring tool according to claim 7, **characterised in that** the radial extent (width B) of the stirring vanes (11) corresponds with 0.4 to 0.8 times, particularly approximately 0.6 times, the offset (V) between the axis (3) of rotation of the base part (2) and the axis (8) of rotation of the vane stirrer (7).

9. Stirring tool according to claim 1, **characterised in that** the slots (13) extend parallelly to the axis (8) of rotation of the vane stirrer (7).

10. Stirring tool according to any one of the preceding claims, **characterised in that** the vane stirrers (7) and/or the stirring vanes (11) are provided to be detachable and/or exchangeable.

11. Stirring tool according to any one of the preceding claims, **characterised in that** the stirring vanes (11) are attached to a shank (6), the projecting end of which is rotatably mounted in the base part (2).

12. Stirring tool according to any one of the preceding claims, **characterised in that** the base part (2) has two diametrically opposite arms (4), at each of which a respective vane stirrer (7) is arranged.

13. Stirring tool according to any one of the preceding claims, **characterised in that** the stirring vanes (11) are arranged to be uniformly distributed over the circumference of the vane stirrer (7).

14. Stirring tool according to claim 12, **characterised in that** each vane stirrer (7) has three stirring vanes (11).

## Revendications

1. Agitateur (1) pour un appareil ménager, comprenant une pièce de base (2) rotative autour d'un axe de rotation (3) et au moins un agitateur à ailettes (7) qui est logé en tournant librement dans la pièce de base (2) et dont l'axe de rotation (8), par rapport à l'axe de rotation (3) de la pièce de base (2), est disposé de manière radialement décalée, au moins deux ailettes d'agitation (11) s'étendant radialement de l'axe de rotation (8) de l'agitateur à ailettes (7) vers l'extérieur, et le coefficient de résistance à l'écoulement des ailettes d'agitation (11) étant différent lors du soufflage du côté avant et du côté arrière, le contour extérieur des ailettes d'agitation (11) s'étendant essentiellement de manière équidistante par rapport à l'axe de rotation (8) de l'agitateur à ailettes (7), **caractérisé en ce que** les ailettes d'agitation (11) présentent des fentes (13).

2. Agitateur selon la revendication 1, **caractérisé en ce que** les ailettes d'agitation (11) sont courbées de manière arquée dans une direction perpendiculaire à l'axe de rotation (8) de l'agitateur à ailettes (7).

3. Agitateur selon la revendication 1 ou 2, **caractérisé en ce que** le coefficient de résistance à l'écoulement de l'ailette d'agitation (11), lors de la rotation de la pièce de base (2), dans sa position la plus éloignée possible de l'arbre d'entraînement est plus grand que dans sa position la plus proche de l'arbre d'entraînement.

4. Agitateur selon l'une quelconque des revendications précédentes, **caractérisé en ce que** la courbure est réalisée en forme d'arc de cercle.

5. Agitateur selon la revendication 4, **caractérisé en ce que** le rayon (r) de la courbure correspond à 0,5 jusqu'à 0,7 fois, de préférence à 0,6 fois, l'étendue radiale (largeur B) des ailettes d'agitation (11).

6. Agitateur selon l'une quelconque des revendications 4 ou 6, **caractérisé en ce que** le point central de courbure de l'ailette d'agitation (11) respectivement située radialement à l'extérieur est disposé au-delà de son côté avant.

7. Agitateur selon l'une quelconque des revendications précédentes, **caractérisé en ce que** les axes de rotation (8) des agitateurs à ailettes (7) sont orientés parallèlement à l'axe de rotation (3) de la pièce de base (2) de l'agitateur (1).

8. Agitateur selon la revendication 7, **caractérisé en ce que** l'étendue radiale (largeur B) des ailettes d'agitation (11) correspond à 0,4 jusqu'à 0,8 fois, notamment à environ 0,6 fois le déport (V) entre l'axe de rotation (3) de la pièce de base (2) et l'axe de rotation (8) de l'agitateur à ailettes (7).

9. Agitateur selon la revendication 1, **caractérisé en ce que** les fentes (13) s'étendent parallèlement à l'axe de rotation (8) de l'agitateur à ailettes (7).

10. Agitateur selon l'une quelconque des revendications précédentes, **caractérisé en ce que** les agitateurs à ailettes (7) et/ou les ailettes d'agitation (11) sont ménagés de manière amovible et/ou interchangeable.

11. Agitateur selon l'une quelconque des revendications précédentes, **caractérisé en ce que** les ailettes d'agitation (11) sont appliquées contre un tronc (6) dont l'extrémité en saillie est logée de manière rotative dans la pièce de base (2).

12. Agitateur selon l'une quelconque des revendications précédentes, **caractérisé en ce que** la pièce de base (2) présente deux bras (4) diamétralement opposés l'un à l'autre, sur lesquels est respectivement disposé un agitateur à ailettes (7).

13. Agitateur selon l'une quelconque des revendications précédentes, **caractérisé en ce que** les ailettes d'agitation (11) sont disposées en étant réparties régulièrement sur la circonférence de l'agitateur à ailettes (7).

14. Agitateur selon la revendication 12, **caractérisé en ce que** chaque agitateur à ailettes (8) présente trois ailettes d'agitation (11).
